# EUROPÄISCHE PATENTANMELDUNG

(11) **EP 4 806 672 A1**
(43) Veröffentlichungstag der Anmeldung: **16.09.2026**
(21) Anmeldenummer: 26162647.7
(22) Anmeldetag: 05.03.2026
(51) Int. Cl.: B60C 27/06, B60C 27/10, B60C 27/20, B60C 27/12

(54) **LEICHT VERSTAUBARE GLEITSCHUTZVORRICHTUNG**

(30) Priorität: 11.03.2025 DE 102025109109
(71) Anmelder: RUD Ketten Rieger & Dietz GmbH u. Co. KG, 73432 Aalen (DE)
(72) Erfinder: ARRIGONI NERI, Marco, 73432 Aalen (DE); GRIMM, Anton, 73432 Aalen (DE); SIEBER, Frank, 73432 Aalen (DE); LOBINE, Danilo, 73432 Aalen (DE); RIEGER, Johannes, 73432 Aalen (DE)
(74) Vertreter: Grünecker Patent- und Rechtsanwälte PartG mbB

(57) **Zusammenfassung**

Die Erfindung betrifft eine Gleitschutzvorrichtung (1) für einen eine Lauffläche (8) aufweisenden Reifen (2) eines Kraftfahrzeugs, mit einem traktionssteigernden Laufgürtel (12), der bei montierter Gleitschutzvorrichtung (1) in einer Umfangsrichtung (20) geschlossen auf der Lauffläche (8) des Reifens (2) aufliegt, wobei der Laufgürtel (12) in Umfangsrichtung (20) voneinander beabstandete Leiterelemente (24) aufweist, die bei montierter Gleitschutzvorrichtung (1) zumindest abschnittsweise auf der Lauffläche (8) des Reifens (2) aufliegen und sich von einer dem Kraftfahrzeug zugewandten Innenseite (4) des Reifens (2) zu einer bei montierter Gleitschutzvorrichtung (1) an einer vom Reifen (2) wegweisenden Außenseite (6) des Reifens (2) angeordneten Außenhalterung (10) erstrecken, mit einem Zugmittel (14) zum Spannen des Laufgürtels (12), das sich bei montierter Gleitschutzvorrichtung (1) von der Innenseite (4) über die Lauffläche (8) zur Außenhalterung (10) erstreckt, mit einer zum Spannen des Zugmittels (14) ausgestalteten Spannvorrichtung (16), und wobei die Gleitschutzvorrichtung (1) zumindest abschnittsweise hohlzylindrische Versteifungselemente (18) aufweist, durch die hindurch sich das Zugmittel (14) erstreckt, wobei sich die Versteifungselemente (18) mit dem darin angeordneten Zugmittel (14) bei montierter Gleitschutzvorrichtung (1) entlang einer dem Kraftfahrzeug zugewandten Innenflanke (52) des Reifens (2) erstrecken. Eine solche Gleitschutzvorrichtung ist leicht verstaubar und nach ihrer Lagerung schnell wieder einsatzbereit.

## Beschreibung

Die vorliegende Erfindung betrifft eine Gleitschutzvorrichtung zur Anbringung an einem Reifen eines Kraftfahrzeugs.

Gleitschutzvorrichtungen dienen dazu, die Traktion des Kraftfahrzeugrades auf rutschigem Untergrund wie Eis, Matsch oder Schnee zu erhöhen. Dazu werden sie üblicherweise bedarfsgerecht, beispielsweise nach einem Schneefall, am Reifen des Kraftfahrzeugs angebracht. Sobald keine Notwendigkeit für die Gleitschutzvorrichtungen mehr besteht, werden diese in der Regel abmontiert und bis zur nächsten Anwendung verstaut.

Gleitschutzvorrichtungen nehmen bei ihrer Lagerung häufig viel Platz in Anspruch und sind nach ihrer Lagerung nur umständlich erneut verwendbar, da sie zunächst entwirrt werden müssen.

Der vorliegenden Erfindung liegt daher die Aufgabe zugrunde, eine leicht verstaubare Gleitschutzvorrichtung bereitzustellen, die nach ihrer Lagerung rasch wieder einsatzbereit ist.

Diese Aufgabe wird gelöst durch eine Gleitschutzvorrichtung für einen eine Lauffläche aufweisenden Reifen eines Kraftfahrzeugs,
mit einem traktionssteigernden Laufgürtel, der bei montierter Gleitschutzvorrichtung in einer Umfangsrichtung geschlossen auf der Lauffläche des Reifens aufliegt,
wobei der Laufgürtel in Umfangsrichtung voneinander beabstandete Leiterelemente aufweist, die bei montierter Gleitschutzvorrichtung zumindest abschnittsweise auf der Lauffläche des Reifens aufliegen und sich von einer dem Kraftfahrzeug zugewandten Innenseite des Reifens zu einer bei montierter Gleitschutzvorrichtung an einer vom Reifen wegweisenden Außenseite des Reifens angeordneten Außenhalterung erstrecken,
mit einem Zugmittel zum Spannen des Laufgürtels, das sich bei montierter Gleitschutzvorrichtung von der Innenseite über die Lauffläche zur Außenhalterung erstreckt,
mit einer zum Spannen des Zugmittels ausgestalteten Spannvorrichtung, und
wobei die Gleitschutzvorrichtung zumindest abschnittsweise hohlzylindrische Versteifungselemente aufweist, durch die hindurch sich das Zugmittel erstreckt, wobei sich die Versteifungselemente mit dem darin angeordneten Zugmittel bei montierter Gleitschutzvorrichtung entlang einer dem Kraftfahrzeug zugewandten Innenflanke des Reifens erstrecken.

Die Versteifungselemente dienen dazu, das Zugmittel zumindest abschnittsweise zu stabilisieren. Dadurch wird eine Verformung, insbesondere ein Abknicken oder eine Schlaufenbildung des Zugmittels in den von den Versteifungselementen umgebenen Bereichen verhindert. Auf diese Weise ist unterbunden, dass sich das Zugmittel beim Verstauen, insbesondere beim Aufrollen oder Falten der Gleitschutzvorrichtung beispielsweise im Laufgürtel verfängt oder verheddert. Die Gleitschutzvorrichtung muss beim erneuten Montieren also nicht erst entwirrt werden und ist somit rasch einsatzbereit. Überdies ist bei der Montage der Gleitschutzvorrichtung durch die Versteifungselemente verhindert, dass sich das Zugmittel im Reifenprofil, insbesondere in Stollen des Reifenprofils verhakt.

Die obige Erfindung kann durch die folgenden Merkmale, die jeweils für sich vorteilhaft und beliebig miteinander kombinierbar sind, weiter verbessert werden.

In einer konstruktiv simplen und kostengünstigen Ausgestaltung können die Versteifungselemente und/oder Leiterelemente zumindest abschnittsweise röhrenförmig, hülsenförmig, oder schlauchförmig ausgestaltet sein.

In einer besonders einfachen Ausgestaltung kann eine Längsachse der Versteifungselemente gerade sein. Um die Versteifungselemente während des Montierens der Gleitschutzvorrichtung leicht über die Lauffläche des Reifens stülpen zu können, können die Längsrichtungen der Versteifungselemente jedoch auch gekrümmt sein, so dass die Versteifungselemente beispielsweise torussegmentförmig sind. Ein Krümmungsradius der gekrümmten Versteifungselemente kann dabei einem Krümmungsradius desjenigen kreisringförmigen Bereichs der Innenflanke entsprechen, an der die Versteifungselemente bei montierter Gleitschutzvorrichtung an der Innenflanke anliegen.

Damit die Versteifungselemente während des Fahrens nicht gegen die Innenflanke des Reifens schlagen, liegen die Versteifungselemente bei montierter Gleitschutzvorrichtung vorzugsweise an der Innenflanke des Reifens auf.

Die Versteifungselemente können Teil einer bei montierter Gleitschutzvorrichtung an der Innenseite des Reifens angeordneten Innenhalterung der Gleitschutzvorrichtung sein.

Um das Verstauen bzw. Zusammenlegen der Gleitschutzvorrichtung zu vereinfachen, sind das Zugmittel, der Laufgürtel, die Außenhalterung und/oder die Innenhalterung vorzugsweise biegeschlaff ausgestaltet.

Im Bereich der Leiterelemente bzw. insbesondere dort, wo die Leiterelemente am Zugmittel angeordnet sind, liegt das Zugmittel vorzugsweise frei.

Die Gleitschutzvorrichtung kann Verbindungselemente aufweisen, die den Laufgürtel mit dem Zugmittel und/oder der Außenhalterung verbinden. Als Verbindungselemente kommen beispielsweise Haken oder Ösen in Betracht.

Um die beim Fahren entstehenden Zentrifugalkräfte des Laufgürtels aufnehmen zu können, kann der Laufgürtel wenigstens einen Kettenstrang aufweisen, der sich vorzugsweise geschlossen entlang der Umfangsrichtung des Reifens erstreckt. Der wenigstens eine Kettenstrang kann an einer Stelle in Umfangsrichtung unterbrochen sein, wo sich das Zugmittel über die Lauffläche des Reifens erstreckt bzw. wo das Zugmittel über die Lauffläche des Reifens geführt ist. Der wenigstens eine Kettenstrang ist dabei vorzugsweise an in Umfangsrichtung weisenden Seiten desjenigen Leiterelements bzw. derjenigen Leiterelemente, durch das bzw. durch die hindurch das Zugmittel über die Lauffläche verlaufen kann bzw. können, befestigt.

Der wenigstens eine Kettenstrang kann Kettenglieder aufweisen, die bei montierter Gleitschutzvorrichtung schräg auf der Lauffläche des Reifens aufliegen können. Von den Kettengliedern jeweils aufgespannte Ebenen können abwechselnd um etwa +30° bis etwa +60°, insbesondere etwa +45°, und um etwa -30° bis etwa -60°, insbesondere etwa -45°, gegenüber der Lauffläche geneigt sein. Eine Projektion in Umfangsrichtung zweier bei montierter Gleitschutzvorrichtung in Umfangsrichtung benachbarter Kettenglieder kann im Wesentlichen die Form eines Andreas-, Schragen- oder Strebenkreuzes aufweisen.

Damit sich das Zugmittel beim Spannen an der Innenseite des Reifens gleichmäßig zusammenzieht, sich insbesondere ein Radius des Zugmittels an der Innenseite des Reifens gleichmäßig verkleinert, können sich die Versteifungselemente gemäß einer weiteren Ausgestaltung bei montierter Gleitschutzvorrichtung ringförmig entlang der Innenflanke des Reifens erstrecken. Die Versteifungselemente können sich unterbrochen ringförmig entlang der Innenflanke erstrecken, so dass zwischen zwei in Umfangsrichtung benachbarten Versteifungselementen jeweils eine Lücke angeordnet ist. Vorzugsweise erstrecken sich die Versteifungselemente jedoch geschlossen ringförmig entlang der Innenflanke des Reifens, um den sich an der Innenseite des Reifens angeordneten Teil des Zugmittels über seinen gesamten Umfang zu schützen.

Die Versteifungselemente können sich in Umfangsrichtung, insbesondere bei gerade ausgestalteten Versteifungselementen insbesondere tangential zur Umfangsrichtung erstrecken.

Gemäß einer weiteren Ausgestaltung kann die Anzahl der Leiterelemente zwischen vier und acht betragen, wobei in Bezug auf die Umfangsrichtung zwischen zwei in Umfangsrichtung benachbarten Leiterelementen jeweils wenigstens ein Versteifungselement angeordnet ist. **In** dieser Ausgestaltung sind ausreichend Leiterelemente und Versteifungselemente vorhanden, um der Gleitschutzvorrichtung eine für die Montage ausreichende Formstabilität zu verleihen. Gleichzeitig sind nicht zu viele Leiterelemente bzw. Versteifungselemente vorgesehen, was eine umständliche Montage verhindert. Um größere Unwuchten zu verhindern, sind die Leiterelemente und/oder Versteifungselemente in Umfangsrichtung vorzugsweise äquidistant voneinander beabstandet.

Die Traktion der Gleitschutzvorrichtung kann insgesamt erhöht werden, wenn wenigstens eines der Leiterelemente traktionserhöhend ausgestaltet ist.

Damit die Gleitschutzvorrichtung möglichst platzsparend zusammengelegt werden kann, kann eine bei montierter Gleitschutzvorrichtung in Umfangsrichtung gemessene Länge der Versteifungselemente zwischen etwa 8 und 13 cm betragen. Vorzugsweise sind alle Versteifungselemente gleich lang, um die Produktionskosten zu verringern. Die Länge eines Versteifungselements kann entlang seiner Längsrichtung gemessen sein.

Die Gleitschutzvorrichtung kann besonders einfach, rasch und platzsparend verstaut bzw. transportiert werden, wenn die Gleitschutzvorrichtung vom am Reifen montierten Zustand in einen Verstau- oder Transportzustand überführbar ist, wobei im Verstau- oder Transportzustand der Laufgürtel mit dem darin aufgenommenen Zugmittel aufgerollt und/oder gefaltet ist. Im Verstau- oder Transportzustand kann die Gleitschutzvorrichtung die Form eines Pakets annehmen, dessen eine Seite etwa einer axialen Breite der Lauffläche des Reifens und deren andere Seite etwa der Länge der Versteifungselemente entspricht. Vorzugsweise liegen die Versteifungselemente bei der zu dem Paket zusammengefalteten Gleitschutzvorrichtung parallel zueinander.

Um die Gleitschutzvorrichtung im Verstau- oder Transportzustand möglichst kompakt zu gestalten, kann das Zugmittel im Verstau- oder Transportzustand wenigstens an Unterbrechungsstellen, an denen bei montierter Gleitschutzvorrichtung zwischen zwei in Umfangsrichtung benachbarten Leiterelementen angeordnete Versteifungselemente aufeinandertreffen, geknickt oder gefaltet sein. Die Versteifungselemente können an den Unterbrechungsstellen nebeneinander, insbesondere aneinander liegen. An den Unterbrechungsstellen, insbesondere nur an den Unterbrechungsstellen kann das Zugmittel nicht von einem Versteifungselement umgeben sein. **In** einer Ausgestaltung kann das Zugmittel dort, wo die Leiterelemente am Zugmittel angeordnet sind, nicht geknickt sein.

Um die Gleitschutzvorrichtung noch kompakter zu gestalten, kann das Zugmittel um zwischen etwa 90° und etwa 180° knickbar bzw. faltbar sein.

Gemäß einer besonders kompakten Ausgestaltung kann ein Außendurchmesser der Gleitschutzvorrichtung im Verstau- oder Transportzustand etwa der Länge der Versteifungselemente entsprechen. Im Verstau- oder Transportzustand kann die die Gleitschutzvorrichtung die Form einer Rolle annehmen, die den Außendurchmesser aufweist. Sind verschieden lange Versteifungselemente vorgesehen, so kann der Außendurchmesser etwa der Länge des längsten Versteifungselements entsprechen.

Um dem Zugmittel Formstabilität zu verleihen, kann eine Steifigkeit wenigstens eines der Versteifungselemente größer sein als eine Steifigkeit des Zugmittels. Unter der Steifigkeit kann insbesondere die Biegesteifigkeit verstanden sein. In einer besonders formstabilen Ausgestaltung kann wenigstens eines der Versteifungselemente biegestarr ausgestaltet sein. Selbstverständlich kann wenigstens eines der Versteifungselemente flexibel, beispielsweise biegsam, knickbar oder stauchbar sein.

Damit das Zugmittel gut geschützt über die Lauffläche des Reifens geführt werden kann, kann wenigstens eines der Leiterelemente hohl sein, und das Zugmittel kann durch das wenigstens eine hohle Leiterelement hindurch von der Innenseite über die Lauffläche zur Außenseite des Reifens geführt sein. Das wenigstens eine hohle Leiterelement ist vorzugsweise dasjenige Leiterelement, an dessen in Umfangsrichtung weisenden Seiten der wenigstens eine Kettenstrang des Laufgürtels befestigt ist.

Die Leiterelemente sind um ihre Längsrichtungen vorzugsweise nicht drehbar.

Um die Anzahl der beweglichen Teile zu reduzieren und damit die Montage der Gleitschutzvorrichtung zu erleichtern, kann wenigstens eines der Versteifungselemente an einem der Leiterelemente befestigt sein. In einer Ausgestaltung, bei der zwischen in Umfangsrichtung benachbarten Leiterelementen jeweils zwei Versteifungselemente angeordnet sind, kann jedes dieser zwei Versteifungselemente an jeweils einem dieser Leiterelemente angeordnet sein.

Gemäß einer weiteren Ausgestaltung kann der Laufgürtel Breithalteelemente aufweisen, die bei montierter Gleitschutzvorrichtung auf der Lauffläche aufliegen, wobei zwischen zwei in Umfangsrichtung benachbarten Leiterelementen jeweils wenigstens zwei der Breithalteelemente angeordnet sind. Die Breitehalteelemente dienen dazu, dem Laufgürtel Struktur zu verleihen, so dass dieser bei montierter Gleitschutzvorrichtung gleichmäßig auf der Lauffläche des Reifens aufliegt.

Ferner kann die Gleitschutzvorrichtung über die Wahl der Anzahl und Länge der Breithalteelemente an verschiedene Reifengrößen angepasst werden.

Die Breithalteelemente verlaufen vorzugsweise parallel zueinander und parallel zu den Leiterelementen. Eine in Axialrichtung des Reifens gemessene Länge der Breithalteelemente ist bevorzugt geringer als eine in Axialrichtung des Reifens gemessene Länge der Leiterelemente.

Gemäß einer konstruktiv einfachen Ausgestaltung kann der Laufgürtel ausschließlich über die Leiterelemente mit dem Zugmittel und/oder der Außenhalterung verbunden sein.

In einer kostengünstigen Ausgestaltung kann wenigstens eines der Versteifungselemente und/oder Leiterelemente und/oder Breithalteelemente zumindest abschnittsweise aus einem Kunststoff spritzgegossen oder extrudiert sein. Die Leiterelemente und/oder Breithalteelemente können an den wenigstens einen Kettenstrang angespritzt sein. Die Leiterelemente und/oder Breithalteelemente können spritzgegossene Körper sein, von denen der wenigstens eine Kettenstrang umspritzt ist.

Um die Gleitschutzvorrichtung widerstandsfähiger und langlebiger zu gestalten, kann das wenigstens eine spritzgegossene Versteifungselement und/oder Leiterelement und/oder Breithalteelement zumindest abschnittsweise aus einem Material bestehen, dessen Verschleißfestigkeit größer ist als die des Kunststoffs. Unter der Verschleißfestigkeit kann insbesondere die Verschleißbeständigkeit gemäß DIN 50320 oder eine Härte verstanden sein.

Der Kunststoff und/oder das Material kann wenigstens einen der folgenden Werkstoffe aufweisen: PA, POM(-C), HOPE. Der Werkstoff kann in einer mechanisch widerstandsfähigen Ausgestaltung Verstärkungsfasern wie beispielsweise Glas- oder Carbonfasern aufweisen.

Wenigstens eines der Elemente aus der Gruppe von Elementen umfassend das wenigstens eine Versteifungselement, das wenigstens eine Leiterelement und das wenigstens eine Breithalteelement kann durch Co-Molding und/oder zumindest abschnittsweise aus einem Verbundwerkstoff hergestellt sein.

Damit die Versteifungselemente möglichst langlebig sind, können die Versteifungselemente im Bereich von Gleitflächen, an denen das Zugmittel in dem hohlen Versteifungselement entlanggleitet, aus dem Material bestehen, dessen Verschleißfestigkeit höher ist als die des Kunststoffs. Insbesondere können die Versteifungselemente im Bereich der Gleitflächen beschichtet sein.

Um die Kraft zum Spannen leichter aufbringen zu können, kann die Spannvorrichtung wenigstens einen Flaschenzug aufweisen.

Die Spannvorrichtung ist bei montierter Gleitschutzvorrichtung vorzugsweise an der Außenseite des Reifens und insbesondere an der Außenhalterung der Gleitschutzvorrichtung angeordnet.

Damit die Gleitschutzvorrichtung leicht und zuverlässig über die Lauffläche des Reifens zu spannen ist, kann die Spannvorrichtung wenigstens eine Ratsche aufweisen. Die wenigstens eine Ratsche kann automatisch bzw. selbsttätig, aber auch manuell ausgestaltet sein. Selbstverständlich kann die Spannvorrichtung auch anders ausgestaltet sein und so beispielsweise einen Haken aufweisen, der vorzugsweise in die Außenhalterung einhängbar ist.

Gemäß einer weiteren vorteilhaften Ausgestaltung kann die Gleitschutzvorrichtung wenigstens eine Rückzugssicherung aufweisen, die ausgestaltet ist, ein mit der Spannvorrichtung verbundenes Ende bzw. mit der Spannvorrichtung verbundene Enden des Zugmittels - insbesondere im nicht gespannten Zustand des Zugmittels - an der Außenseite des Reifens zu halten. Die Rückzugssicherung kann insbesondere ausgestaltet sein, zu verhindern, dass das mit der Spannvorrichtung verbundene Ende bzw. die mit der Spannvorrichtung verbundenen Enden des Zugmittels von der Außenseite über die Lauffläche hin zur Innenseite des Reifens gezogen wird bzw. werden. Durch die Rückzugssicherung ist sichergestellt, dass das mit der Spannvorrichtung verbundene Ende bzw. die mit der Spannvorrichtung verbundenen Enden des Zugmittels an der Außenseite des Reifens und damit leicht greifbar verbleibt bzw. verbleiben.

Die Rückzugssicherung kann einen mit dem Zugmittel verbundenen Sicherungskörper aufweisen, dessen Außenabmessungen größer sind als eine lichte Weite des hohlen Leiterelements, durch das das Zugmittel geführt sein kann.

Das Zugmittel kann ausgestaltet sein, den Laufgürtel mittelbar über die Leiterelemente zu spannen. So kann das Zugmittel zuerst die Leiterelemente spannen, die dann wiederum den Laufgürtel spannen.

Im Folgenden ist die Erfindung anhand von Ausführungsbeispielen mit Bezug auf die beigefügten Figuren näher erläutert. Dabei können einzelne, im nachstehenden Ausführungsbeispiel vorhandene Merkmale weggelassen werden, wenn es nach Maßgabe der obigen Ausführungsformen auf den mit diesem Merkmal verknüpften technischen Effekt nicht ankommen sollte. Umgekehrt kann ein oben beschriebenes, aber bei einem nachstehenden Ausführungsbeispiel nicht vorhandenes Merkmal dem Ausführungsbeispiel hinzugefügt werden, wenn es bei einer bestimmten Anwendung auf den mit diesem Merkmal verknüpften technischen Effekt ankommen sollte.

Im Folgenden sind für Elemente, die einander hinsichtlich Struktur und/oder Funktion entsprechen, dieselben Bezugszeichen verwendet.

Es zeigen:
- Fig. 1: eine schematische perspektivische Darstellung eines Reifens mit einer Gleitschutzvorrichtung gemäß einem möglichen Ausführungsbeispiel, schräg auf eine Innenseite des Reifens blickend;
- Fig. 2: eine schematische Draufsicht auf die Innenseite des Reifens mit der Gleitschutzvorrichtung aus Fig. 1;
- Fig. 3: eine schematische perspektivische Darstellung des Reifens mit der Gleitschutzvorrichtung aus Fig. 1, schräg auf eine Außenseite des Reifens blickend;
- Fig. 4: eine schematische Draufsicht auf eine Lauffläche des Reifens mit der Gleitschutzvorrichtung aus Fig. 1;
- Fig. 5: eine schematische perspektivische Darstellung des Reifens mit der Gleitschutzvorrichtung aus Fig. 1 bei nicht gespannter Spannvorrichtung, auf die Außenseite des Reifens blickend;
- Fig. 6: eine schematische Draufsicht auf die Lauffläche des Reifens mit der Gleitschutzvorrichtung aus Fig. 5;
- Fig. 7: eine schematische perspektivische Darstellung einer zum Aufrollen vorbereiteten Gleitschutzvorrichtung gemäß einem möglichen Ausführungsbeispiel;
- Fig. 8: eine schematische perspektivische Darstellung der Gleitschutzvorrichtung aus Fig. 7 in einem Verstau- oder Transportzustand; und
- Fig. 9: eine schematische perspektivische Darstellung der Gleitschutzvorrichtung aus Fig. 8 mit einer Tasche.

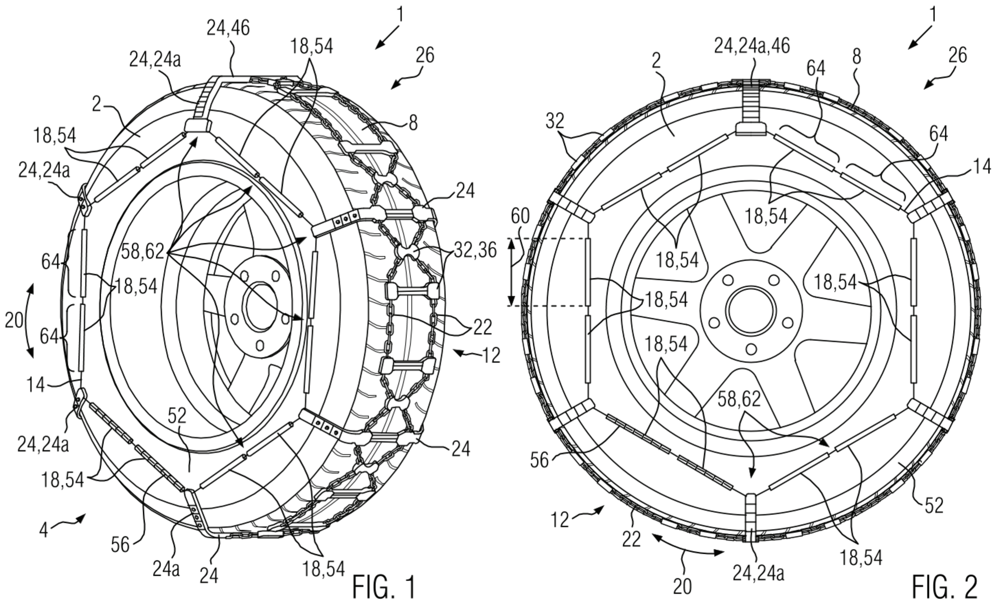

In den Figuren 1 bis 4 ist rein exemplarisch eine Gleitschutzvorrichtung 1 an einem Reifen 2 eines Kraftfahrzeugs montiert dargestellt. Der Reifen 2 weist eine Innenseite 4 und eine der Innenseite 4 gegenüberliegende Außenseite 6 auf. Zwischen der Innenseite 4 und der Außenseite 6 erstreckt sich eine Lauffläche 8, entlang dessen der Reifen 2 auf einem hier nicht dargestellten Untergrund abrollt.

Die Gleitschutzvorrichtung 1 umfasst eine Außenhalterung 10, einen Laufgürtel 12, ein Zugmittel 14, eine zum Spannen des Zugmittels 14 ausgestaltete Spannvorrichtung 16 sowie mehrere Versteifungselemente 18.

Der Laufgürtel 12 erstreckt sich entlang einer Umfangsrichtung 20 des Reifens 2 geschlossen auf der Lauffläche 8 des Reifens 2 und ist dazu ausgestaltet, die Traktion des Reifens 2 auf dem Untergrund zu erhöhen. Der Laufgürtel 12 kann in der in den Figuren 1 bis 4 gezeigten Ausgestaltung Kettenstränge 22 aufweisen, die sich jeweils geschlossen in Umfangsrichtung 20 erstrecken. Durch die geschlossenen Kettenstränge 22 können während des Fahrens entstehende Zentrifugalkräfte im Laufgürtel 12 aufgenommen werden, so dass insbesondere die Außenhalterung 10 nicht sehr belastbar sein muss.

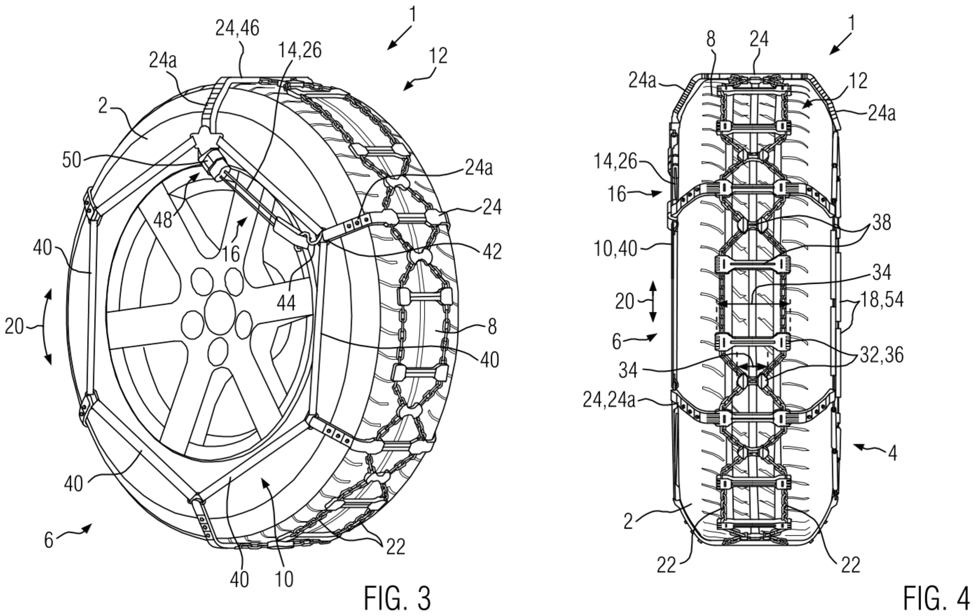

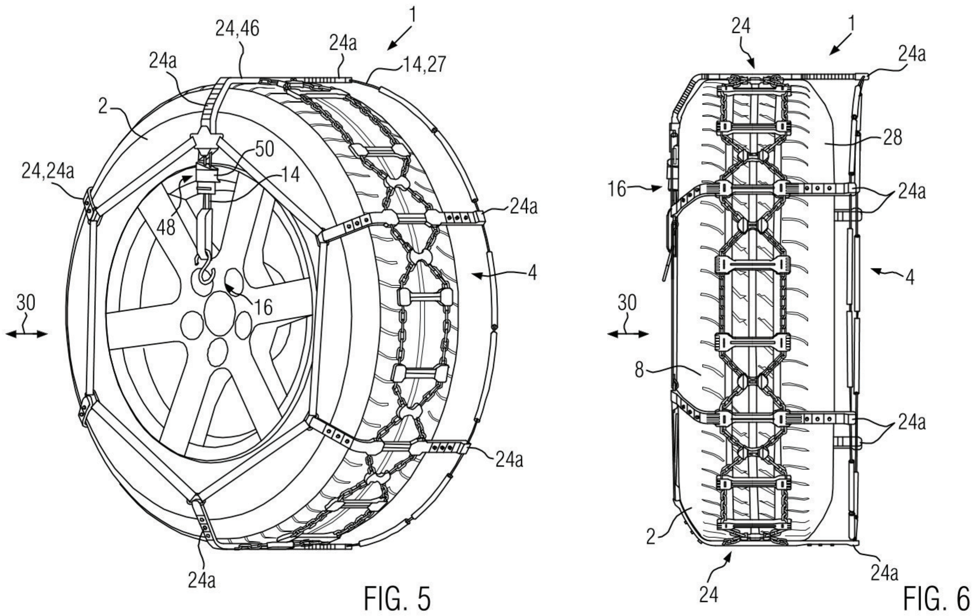

Der Laufgürtel 2 weist mehrere, im vorliegenden Ausführungsbeispiel rein beispielhaft sechs Leiterelemente 24 auf, die in Umfangsrichtung 20 insbesondere äquidistant voneinander beabstandet sein können. Die Leiterelemente 24 liegen zumindest abschnittsweise auf der Lauffläche 8 des Reifens 2 auf und erstrecken sich von der Innenseite 4 zur Außenseite 6 des Reifens 2. Die Leiterelemente 24 können an ihren axialen Enden 24a jeweils biegsam bzw. knickbar sein, um sich in einem gespannten Zustand 26 des Zugmittels 14 an Reifenschultern 28 an der Innenseite 4 und/oder Außenseite 6 des Reifens 2 annähern zu können. Die Figuren 5 und 6 zeigen rein beispielhaft die am Reifen 2 (noch nicht vollständig) montierte Gleitschutzvorrichtung 1 in einem nicht gespannten Zustand 27 des Zugmittels 14. Hier können die axialen Enden 24a der Leiterelemente 24 an der Innenseite 4 des Reifens 2 nicht gebogen bzw. geknickt sein und sich insbesondere entlang einer Axialrichtung 30 des Reifens 2 erstrecken, so dass die Gleitschutzvorrichtung 1 zur Montage über den Reifen 2 gestülpt werden kann. Sobald die Gleitschutzvorrichtung 1 über den Reifen 2 gestülpt worden ist, kann das Zugmittel 14 mithilfe der Spannvorrichtung 16 gespannt werden, so dass die axialen Enden 24a der Leiterelemente 24 - wie in Figur 4 gezeigt - in Richtung der Reifenschultern 28 des Reifens 2 geklappt werden.

Wie in den Figuren 1 und 4 besonders gut zu erkennen ist, kann der Laufgürtel 12 Breithalteelemente 32 aufweisen, die auf der Lauffläche 8 des Reifens 2 aufliegen und dazu ausgestaltet sind, den Laufgürtel 12, insbesondere die Kettenstränge 22 des Laufgürtels 12 in Axialrichtung 30 auseinanderzuhalten. Die Breithalteelemente 32 müssen dabei nicht, wie hier dargestellt, unterschiedliche, in Längsrichtung der Breithalteelemente 32 gemessene Längen 34 aufweisen. So können in anderen Ausgestaltungen alle Breithalteelemente 32 die gleiche Länge 34 aufweisen. Selbstverständlich kann in anderen Ausgestaltungen auch die Anzahl der Breithalteelemente 32, insbesondere die Anzahl der Breithalteelemente 32 zwischen jeweils zwei in Umfangsrichtung 20 benachbarten Leiterelementen 24 variieren. So können zwischen zwei benachbarten Leiterelementen 24 beispielsweise jeweils lediglich zwei Breithalteelemente 32 vorgesehen sein.

Im in den Figuren 1 bis 4 gezeigten Ausführungsbeispiel können die Leiterelemente 24 und/oder die Breithalteelemente 32 von einem Kunststoffkörper 36 gebildet sein bzw. einen Kunststoffkörper 36 aufweisen, von dem die Kettenstränge 22 des Laufgürtels 12 zumindest abschnittsweise umspritzt sind.

Aus Figur 4 ist ferner ersichtlich, dass die Leiterelemente 24 und/oder die Breithalteelemente 32 jeweils einen traktionserhöhenden Einleger 38 aufweisen können. Die Einleger 38 können beispielsweise aus einem Werkstoff gefertigt sein, dessen Verschleißfestigkeit höher ist als die des (restlichen) Breithalteelements 32 bzw. Leiterelements 24. Im in den Figuren 1 bis 4 gezeigten Ausführungsbeispiel, wo die Leiterelemente 24 und Breithalteelemente 32 von dem Kunststoffkörper 36 gebildet sein können, können die Einleger 38 beispielsweise aus einem metallischen Werkstoff gefertigt sein.

An der Außenseite 6 des Reifens 2 können die Leiterelemente 24, insbesondere die axialen Enden 24a der Leiterelemente 24 mit der Außenhalterung 10 verbunden sein, die sich in Umfangsrichtung 20 entlang der Außenseite 6 des Reifens 2 erstreckt. Die Außenhalterung 10 ist vorzugsweise biegeschlaff ausgestaltet, um die Gleitschutzvorrichtung 1 zusammenfalten bzw. zusammenrollen und so gut verstauen zu können. Die Außenhalterung 10 kann beispielsweise aus einer Mehrzahl von Gurten 40 bestehen, die über Verbindungselemente 42 mit den Leiterelementen 24 verbunden sind. Selbstverständlich sind der Ausgestaltung der Außenhalterung 10 jedoch kaum Grenzen gesetzt.

Wie aus Figur 3 ersichtlich ist, ist die Spannvorrichtung 16 zum Spannen des Zugmittels 14 vorzugsweise an der Außenseite 6 des Reifens 2, insbesondere an der Außenhalterung 10 angeordnet. Im dargestellten Ausführungsbeispiel ist eine simple mechanische Ausgestaltung der Spannvorrichtung 16 dargestellt. Diese kann einen Haken 44 aufweisen, der an in Figur 3 nicht zu sehenden Enden des Zugmittels 14 befestigt sein kann. Zum Spannen des Zugmittels 14 wird am Haken 44 gezogen und dieser anschließend in die Außenhalterung 10, hier insbesondere in eines der Verbindungselemente 42, über das die Leiterelemente 24 mit den Gurten 40 der Außenhalterung 10 verbunden sind, eingehängt.

Wie in den Figuren 1 und 3 zu sehen ist, erstreckt sich das Zugmittel 14 von der Innenseite 4 der Gleitschutzvorrichtung 1 über die Lauffläche 8 des Reifens 2 hin zur Außenhalterung 10 der Gleitschutzvorrichtung 1. Der Abschnitt des Zugmittels 14, der über die Lauffläche 8 des Reifens 2 läuft, ist in Figur 3 nicht zu erkennen, da das Zugmittel 14 in dieser Ausgestaltung exemplarisch durch ein hohles Leiterelement 24, 46 verläuft. Indem das Zugmittel 24 durch das hohle Leiterelement 24, 46 verläuft, wird es insbesondere im Bereich der Lauffläche 8 geschützt.

Damit sich das Zugmittel 14 im nicht gespannten Zustand 27 nicht zurückziehen und insbesondere in dem hohlen Leiterelement 46 ungreifbar verschwinden kann, kann ferner eine Rückzugssicherung 48 vorgesehen sein (siehe Fig. 3 und 5). Im vorliegenden Ausführungsbeispiel kann die Rückzugssicherung 48 einen mit dem Zugmittel verbundenen Sicherungskörper 50 aufweisen, dessen Außenabmessungen größer sind als eine lichte Weite eines in den Figuren 3 und 5 nicht dargestellten Hohlraums des hohlen Leiterelements 24, 46, durch das das Zugmittel 14 geführt sein kann.

In den Figuren 1 und 2 ist zu erkennen, dass sich das Zugmittel 14 vorzugsweise ringförmig an der Innenseite 4, insbesondere einer Innenflanke 52 des Reifens 2 erstrecken kann. Das Zugmittel 14 verläuft durch mehrere hohlzylindrische Versteifungselemente 18, die sich entlang der Innenflanke 52 des Reifens 2 erstrecken. In dem hier gezeigten Ausführungsbeispiel sind die Versteifungselemente 18 rein beispielhaft als insbesondere gerade Hülsen 54 ausgestaltet und Längsrichtungen 56 der Versteifungselemente 18 erstrecken sich entlang der, insbesondere tangential zur Umfangsrichtung 20. Selbstverständlich können die Versteifungselemente 18 in anderen Ausgestaltungen auch zumindest abschnittsweise gekrümmt und so beispielsweise torussegmentförmig ausgestaltet sein.

Wie in Fig. 1 und 2 weiter zu erkennen ist, können sich die Versteifungselemente 18 ringförmig entlang der Innenflanke 52 des Reifens 2 erstrecken. Zwischen zwei in Umfangsrichtung 20 benachbarten Versteifungselementen 18 muss dabei nicht zwangsläufig eine Lücke 58 vorhanden sein, an dem das Zugmittel 14 freiliegt. So können sich die Versteifungselemente 18 in anderen Ausgestaltungen auch geschlossen bzw. ununterbrochen entlang der Innenflanke 52 erstrecken, so dass das Zugmittel 14 an der Innenflanke 52 an keiner Stelle freiliegt.

Gemäß den Figuren 1 und 2 können zwischen jeweils zwei in Umfangsrichtung 20 benachbarten Leiterelementen 14 rein exemplarisch genau zwei Versteifungselemente 18 angeordnet sein. Jedes der Versteifungselemente 18 kann eine gleiche Länge 60 aufweisen, die in Längsrichtung 56 der Versteifungselemente 18 gemessen sein kann. Selbstverständlich ist es gemäß anderen Ausgestaltungen aber auch denkbar, dass zwischen wenigstens zwei in Umfangsrichtung 20 benachbarten Leiterelementen 24 jeweils nur ein Versteifungselement 18 oder mehr als zwei Versteifungselemente 18 angeordnet sind. Zudem müssen die Längen 60 der Versteifungselemente 18 nicht gleich sein und können von den in Figur 1 und 2 gezeigten Längen 60 der Versteifungselemente 18 abweichen.

Zum Falten bzw. Zusammenrollen der Gleitschutzvorrichtung 1 kann das Zugmittel 14 zumindest an Unterbrechungsstellen 62 (siehe Fig. 1 und 2), an denen zwei in Umfangsrichtung 20 benachbarte Versteifungselemente 18 aufeinandertreffen, insbesondere an den Lücken 58, geknickt bzw. gebogen werden. Durch die Formstabilisierung, die das Zugmittel 14 zumindest in von den Versteifungselementen 18 umgebenen Abschnitten 64 erhält, ist verhindert, dass das Zugmittel 14 beim Falten bzw. Aufrollen der Gleitschutzvorrichtung 1 Schlaufen bildet und sich beispielsweise im Laufgürtel 12 verheddert.

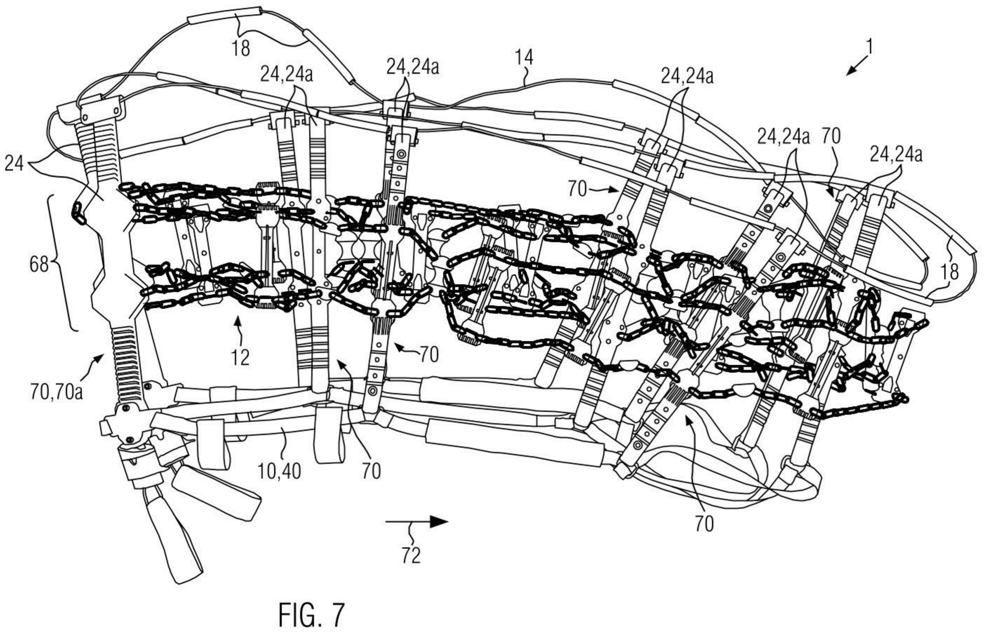

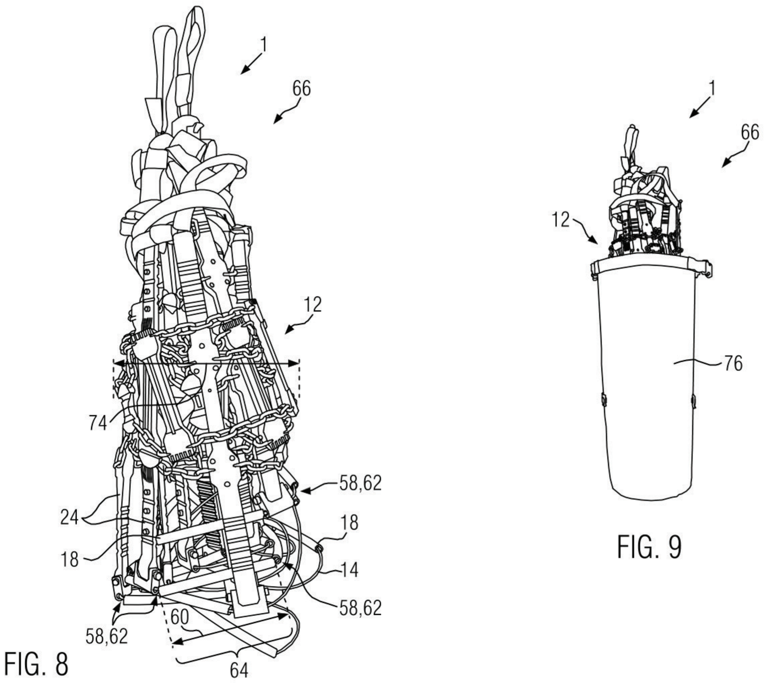

Eine Gleitschutzvorrichtung 1, die sich in einem Verstau- oder Transportzustand 66 befindet, ist in den Figuren 8 und 9 beispielhaft gezeigt. In Figur 7 ist zudem die in den Figuren 8 und 9 dargestellte Gleitschutzvorrichtung 1 gezeigt, die zur Vorbereitung des Aufrollens ausgebreitet ist.

Wie in Figur 7 zu sehen ist, kann die Gleitschutzvorrichtung 1 zum Überführen in den Verstau- und Transportzustand 66 zunächst beispielsweise auf dem Boden ausgebreitet werden. Dabei können die Leiterelemente 24 ausgestreckt sein, um den Laufgürtel 12 möglichst flach auslegen zu können. Insbesondere können die axialen Enden 24a eines Leiterelements 24 sich jeweils in Verlängerung eines Abschnitts 68 (siehe auch Fig. 6) dieses Leiterelements 24, der bei montierter Gleitschutzvorrichtung 1 auf der Lauffläche 8 des Reifens 2 aufliegt, befinden. Um das Aufrollen der Gleitschutzvorrichtung 1 zu erleichtern, ist es vorteilhaft, wenn jeweils zwei Leiterelemente 24 paarweise übereinander angeordnet und die resultierenden Paare 70 jeweils übereinander angeordneter Leiterelemente 24 im Wesentlichen parallel zueinander ausgerichtet werden.

In der in Figur 7 gezeigten Gleitschutzvorrichtung 1 können sich die Gurte 40 der Außenhalterung 10 entspannt zwischen zwei jeweils benachbarten Leiterelementen 24 erstrecken. Da die Außenhalterung 10, insbesondere die Gurte 40 der Außenhalterung 10 in dieser Ausgestaltung biegeschlaff ausgestaltet ist bzw. sind, lässt sich die Gleitschutzvorrichtung 1 besonders kompakt zusammenrollen.

Zum Aufrollen der Gleitschutzvorrichtung 1 kann beispielsweise ein linkes Paar 70a Leiterelemente 24 gegriffen werden und entlang einer Aufrollrichtung 72 gerollt werden, bis die Gleitschutzvorrichtung 1 sich in dem in den Figuren 8 und 9 gezeigten Verstau- oder Transportzustand 66 befindet, in dem der Laufgürtel 12 mit dem darin aufgenommenen Zugmittel 14 aufgerollt sein kann. Ein Außendurchmesser 74 der aufgerollten Gleitschutzvorrichtung 1 kann dabei beispielsweise etwa der doppelten bis dreifachen Länge 60 der Versteifungselemente 18 - bzw., falls mehrere verschieden lange Versteifungselemente 18 vorhanden sind, der Länge 60 des längsten Versteifungselements 18 - entsprechen.

Im Verstau- oder Transportzustand 66 kann das Zugmittel 14 zumindest an den Unterbrechungsstellen 62, an denen bei montierter Gleitschutzvorrichtung 1 zwei zwischen benachbarten Leiterelementen 24 angeordnete Versteifungselemente 18 aufeinandertreffen, insbesondere an den Lücken 58, geknickt sein. Da die Form des Zugmittels 14 zumindest in den von den Versteifungselementen 18 umgebenen Abschnitten 64 stabilisiert ist, ist im Verstau- oder Transportzustand 66 verhindert, dass sich das Zugmittel 14 beispielsweise durch Schlaufenbildung in dem aufgerollten Laufgürtel 12 verfängt oder verheddert. Die Gleitschutzvorrichtung 1 kann daher mit geringem Aufwand wieder abgerollt und beispielsweise in den in Figur 7 dargestellten Zustand überführt werden, von dem ausgehend die Gleitschutzvorrichtung 1 rasch erneut am Reifen 2 montierbar ist.

Wie in Figur 8 und 9 zu sehen ist, ist die Gleitschutzvorrichtung 1 im Verstau- oder Transportzustand 66 kompakt und somit leicht zu transportieren und zu verstauen. Dazu kann die Gleitschutzvorrichtung 1 im Verstau- oder Transportzustand 66 beispielsweise in einer Tasche 76 verpackt sein, in der die Gleitschutzvorrichtung 1 bis zur nächsten Anwendung platzsparend und sicher aufbewahrt ist.

### Bezugszeichen

- 1: Gleitschutzvorrichtung
- 2: Reifen
- 4: Innenseite des Reifens
- 6: Außenseite des Reifens
- 8: Lauffläche des Reifens
- 10: Außenhalterung
- 12: Laufgürtel
- 14: Zugmittel
- 16: Spannvorrichtung
- 18: Versteifungselement
- 20: Umfangsrichtung
- 22: Kettenstrang
- 24: Leiterelement
- 24a: axiales Ende des Leiterelements
- 26: gespannter Zustand des Zugmittels
- 27: nicht gespannter Zustand des Zugmittels
- 28: Reifenschulter
- 30: Axialrichtung
- 32: Breithalteelement
- 34: Länge eines Breithalteelements
- 36: Kunststoffkörper
- 38: Einleger
- 40: Gurt
- 42: Verbindungselement
- 44: Haken
- 46: hohles Leiterelement
- 48: Rückzugssicherung
- 50: Sicherungskörper
- 52: Innenflanke des Reifens
- 54: Hülse
- 56: Längsrichtung eines Versteifungselements
- 58: Lücke
- 60: Länge eines Versteifungselements
- 62: Unterbrechungsstellen
- 64: von Versteifungselement umgebener Abschnitt des Zugmittels
- 66: Verstau- oder Transportzustand
- 68: auf der Lauffläche aufliegender Abschnitt eines Leiterelements
- 70: Paar übereinander angeordneter Leiterelemente
- 70a: linkes Paar Leiterelemente
- 72: Aufrollrichtung
- 74: Außendurchmesser der Gleitschutzvorrichtung im Verstau- oder Transportzustand
- 76: Tasche

## Patentansprüche

1. Gleitschutzvorrichtung (1) für einen eine Lauffläche (8) aufweisenden Reifen (2) eines Kraftfahrzeugs,
mit einem traktionssteigernden Laufgürtel (12), der bei montierter Gleitschutzvorrichtung (1) in einer Umfangsrichtung (20) geschlossen auf der Lauffläche (8) des Reifens (2) aufliegt,
wobei der Laufgürtel (12) in Umfangsrichtung (20) voneinander beabstandete Leiterelemente (24) aufweist, die bei montierter Gleitschutzvorrichtung (1) zumindest abschnittsweise auf der Lauffläche (8) des Reifens (2) aufliegen und sich von einer dem Kraftfahrzeug zugewandten Innenseite (4) des Reifens (2) zu einer bei montierter Gleitschutzvorrichtung (1) an einer vom Reifen (2) wegweisenden Außenseite (6) des Reifens (2) angeordneten Außenhalterung (10) erstrecken,
mit einem Zugmittel (14) zum Spannen des Laufgürtels (12), das sich bei montierter Gleitschutzvorrichtung (1) von der Innenseite (4) über die Lauffläche (8) zur Außenhalterung (10) erstreckt,
mit einer zum Spannen des Zugmittels (14) ausgestalteten Spannvorrichtung (16), und
wobei die Gleitschutzvorrichtung (1) zumindest abschnittsweise hohlzylindrische Versteifungselemente (18) aufweist, durch die hindurch sich das Zugmittel (14) erstreckt, wobei sich die Versteifungselemente (18) mit dem darin angeordneten Zugmittel (14) bei montierter Gleitschutzvorrichtung (1) entlang einer dem Kraftfahrzeug zugewandten Innenflanke (52) des Reifens (2) erstrecken.

2. Gleitschutzvorrichtung (1) nach Anspruch 1,
wobei sich die Versteifungselemente (18) bei montierter Gleitschutzvorrichtung (1) ringförmig entlang der Innenflanke (52) des Reifens (2) erstrecken.

3. Gleitschutzvorrichtung (1) nach Anspruch 1 oder 2,
wobei die Anzahl der Leiterelemente (24) zwischen vier und acht beträgt, und wobei in Bezug auf die Umfangsrichtung (20) zwischen zwei in Umfangsrichtung (20) benachbarten Leiterelementen (24) jeweils wenigstens ein Versteifungselement (18) angeordnet ist.

4. Gleitschutzvorrichtung (1) nach einem der Ansprüche 1 bis 3,
wobei eine bei montierter Gleitschutzvorrichtung (1) in Umfangsrichtung (20) gemessene Länge (60) der Versteifungselemente (18) zwischen 8 und 13 cm beträgt.

5. Gleitschutzvorrichtung (1) nach einem der Ansprüche 1 bis 4,
wobei die Gleitschutzvorrichtung (1) vom am Reifen (2) montierten Zustand in einen Verstau- oder Transportzustand (66) überführbar ist, wobei im Verstau- oder Transportzustand (66) der Laufgürtel (12) mit dem darin aufgenommenen Zugmittel (14) aufgerollt ist.

6. Gleitschutzvorrichtung (1) nach Anspruch 5,
wobei das Zugmittel (14) im Verstau- oder Transportzustand (66) wenigstens an Unterbrechungsstellen (62), an denen bei montierter Gleitschutzvorrichtung (1) zwei zwischen in Umfangsrichtung (20) benachbarten Leiterelementen (24) angeordnete Versteifungselemente (18) aufeinandertreffen, geknickt ist.

7. Gleitschutzvorrichtung (1) nach Anspruch 5 oder 6,
wobei ein Außendurchmesser (74) der Gleitschutzvorrichtung (1) im Verstau- oder Transportzustand (66) etwa der Länge (60) der Versteifungselemente (18) entspricht.

8. Gleitschutzvorrichtung (1) nach einem der Ansprüche 1 bis 7,
wobei eine Steifigkeit wenigstens eines der Versteifungselemente (18) größer ist als eine Steifigkeit des Zugmittels (14).

9. Gleitschutzvorrichtung (1) nach einem der Ansprüche 1 bis 8,
wobei wenigstens eines der Leiterelemente (24, 46) hohl ist, und wobei das Zugmittel (14) durch das wenigstens eine hohle Leiterelement (24, 46) hindurch von der Innenseite (4) über die Lauffläche (8) zur Außenseite (6) des Reifens geführt ist.

10. Gleitschutzvorrichtung (1) nach einem der Ansprüche 1 bis 9,
wobei wenigstens eines der Versteifungselemente (18) an einem der Leiterelemente (24, 46) befestigt ist.

11. Gleitschutzvorrichtung (1) nach einem der Ansprüche 1 bis 10,
wobei der Laufgürtel (12) Breithalteelemente (32) aufweist, die bei montierter Gleitschutzvorrichtung (1) auf der Lauffläche (8) aufliegen, und wobei zwischen zwei in Umfangsrichtung (20) benachbarten Leiterelementen (24) jeweils wenigstens zwei der Breithalteelemente (32) angeordnet sind.

12. Gleitschutzvorrichtung (1) nach einem der Ansprüche 1 bis 11,
wobei der Laufgürtel (12) ausschließlich über die Leiterelemente (24) mit dem Zugmittel (14) und/oder der Außenhalterung (10) verbunden ist.

13. Gleitschutzvorrichtung (1) nach einem der Ansprüche 1 bis 12,
wobei wenigstens eines der Versteifungselemente (18) und/oder Leiterelemente (24) und/oder Breithalteelemente (32) zumindest abschnittsweise aus einem Kunststoff spritzgegossen oder extrudiert ist.

14. Gleitschutzvorrichtung (1) nach Anspruch 13,
wobei das wenigstens eine spritzgegossene oder extrudierte Versteifungselement (18) und/oder Leiterelement (24) und/oder Breithalteelement (32) zumindest abschnittsweise aus einem Material besteht, dessen Verschleißfestigkeit größer ist als die des Kunststoffs.

15. Gleitschutzvorrichtung (1) nach einem der Ansprüche 1 bis 14,
wobei die Spannvorrichtung (16) wenigstens eine Ratsche aufweist.
